# FASCICULE DE BREVET EUROPEEN

(11) **EP 0 660 453 B1**
(45) Date de publication et mention de la délivrance du brevet: **12.03.1997**
(21) Numéro de dépôt: 94402971.9
(22) Date de dépôt: 21.12.1994
(51) Int. Cl.: H01R 13/64, H02G 3/16

(54) **Boîte de raccordement électrique**
Elektrische Anschlussdose
Electrical connection box

(30) Priorité: 21.12.1993 FR 9315377
(43) Date de publication de la demande: 28.06.1995
(73) Titulaire: VALEO VISION, 93000 Bobigny (FR)
(72) Inventeur: Tramzal, Philippe, F-69008 Lyon (FR)
(74) Mandataire: Martin, Jean-Jacques

(56) Documents cités:
- EP-A- 0 336 695
- EP-A- 0 451 915
- GB-A- 2 024 768
- GB-A- 2 059 188
- US-A- 4 090 766
- US-A- 4 827 502

## Description

La présente invention se rapporte à une boîte de raccordement électrique pour un véhicule notamment industriel, par exemple une remorque, un camion ou un tracteur routier.

Il est bien connu d'équiper une remorque ou un tracteur routier d'une ou plusieurs boîtes de raccordement électrique. Une telle boîte permet, par exemple au conducteur, d'effectuer lui-même les diverses connexions électriques nécessaires pour l'alimentation des organes électriques situés sur la remorque ou sur le tracteur lui-même, tels que les feux de gabarit, de décor, etc.

Pour réaliser ces connexions, on utilise généralement des sous-ensembles rapportés dans la boîte, composés de barrettes en matière plastique sur lesquelles sont serties ou vissées des bornes qui permettent leur raccordement à des fils électriques unitaires. Ces barrettes sont soit libres à l'intérieur de la boîte, soit fixées au fond de cette dernière.

Un schéma de branchement est fourni avec la boîte. Ce schéma représente, à l'aide de symboles et d'un texte d'accompagnement, le branchement de chacun des fils, en faisant référence à la couleur de sa gaine isolante, sur les bornes des barrettes.

Bien entendu, pour chaque véhicule et pour chaque pays, une étiquette spécifique est nécessaire.

Un autre type de connexion consiste à utiliser des connecteurs de forme et nombre de voies spécifiques avec des affectations particulières.

Ainsi que cela est bien connu, on entend par connecteur une fiche électrique raccordée à un ou plusieurs fils et qui est destinée à être engagée sur la broche mâle d'une barrette pour établir un contact électrique.

Ces dispositifs présentent toutefois de nombreux inconvénients.

Ainsi, on a constaté de nombreuses erreurs de branchement des fils unitaires.

De plus, le temps de branchement complet est long et les connexions sont difficiles à réaliser dans le fond des boîtes.

Par ailleurs, le branchement d'origine, un dépannage ultérieur ou l'adjonction de branchements supplémentaires nécessitent l'intervention d'un spécialiste en électricité ou, du moins, d'une personne formée à la lecture des schémas électriques.

Lorsque les barrettes ne sont pas fixées dans la boîte, le montage présente des risques de court-circuit.

Enfin, le système de connecteurs spécifiques présente l'inconvénient de ne pas permettre de mettre en place des fonctions supplémentaires et de rendre difficile la conception des boîtiers pour en assurer l'étanchéité.

On connaît par ailleurs, dans des domaines éloignés de celui de la présente invention, diverses solutions pour identifier des broches de connexion électrique. Les documents US-A-4,090,766 et GB-A-2,059,188 illustrent en particulier deux de ces solutions connues.

Toutefois, les enseignements de ces documents amèneraient à prévoir au fond d'une boîte de connexion que la présente invention se propose de perfectionner, soit une étiquette adhésive telle que décrite dans le brevet américain, soit un circuit imprimé pourvu d'inscriptions spéciales conformément au document britannique.

Les enseignements de ces documents aboutiraient donc à un accroissement du coût de revient du boîtier, sans facililter l'accessibilité aux formes de connexion.

La présente invention a pour but de pallier les inconvénients précités et de proposer une boîte de raccordement électrique du type indiqué plus haut avec laquelle les connexions électriques sont faciles à mettre en oeuvre, sans risque de se tromper, même pour un opérateur non spécialiste des montages électriques.

La présente invention a pour autre but de faciliter l'accès aux broches de connexion, et d'atteindre l'ensemble de ces objectifs sans accroissement notable du coût de revient de la boîte.

Cette boîte, qui comprend un boîtier muni d'un couvercle, et une série de barrettes métalliques dont les broches mâles sont destinées à recevoir des connecteurs reliés à des fils électriques, est remarquable par le fait que lesdites barrettes sont portées par la face interne du couvercle, que cette dernière est pourvue d'au moins une étiquette comportant des ouvertures pour le passage des broches mâles, engagée sur lesdites broches et retenue par celles-ci et que ladite étiquette porte un repère visuel au voisinage de chaque broche ou groupe de broches, tandis que chaque connecteur associé porte un repère visuel correspondant.

Par ailleurs, selon certaines caractéristiques avantageuses et non limitatives de cette boîte:
- lesdites barrettes sont harponnées dans des gorges formées par une série de nervures solidaires du couvercle et l'étiquette s'appuie sur le bord libre des nervures;
- le repère visuel consiste en une zone de couleur identique à la couleur du connecteur;
- le contour de ladite zone est identique au contour du connecteur;
- la zone entoure les ouvertures.

D'autres caractéristiques et avantages de l'invention apparaîtront de la description et des dessins annexés qui en présente un mode de réalisation préférentiel.

Sur ces dessins:
- la figure 1 est une vue en perspective de la boîte conforme à l'invention, couvercle enlevé;
- la figure 2 est une vue de dessus de la face interne du couvercle, destinée à montrer la forme et la position des barrettes électriques;
- la figure 3 est une vue partielle en coupe verticale du couvercle et de l'étiquette qu'il reçoit;
- la figure 4 est une vue en perspective de la partie supérieure d'une barrette électrique;
- les figures 5 et 6 sont des vues de dessus de la face interne du couvercle où sont représentées deux formes de réalisation de l'étiquette.

La boîte représentée à la figure I est formée d'un boîtier parallèlépipédique 1 en matière plastique rigide comportant une ouverture 12 au niveau de sa face supérieure.

Ce boîtier comporte à sa base, dans les angles formés par ses parois latérales 10 et 11, des pièces 13 de fixation de la boîte sur un support constitué par une partie adéquate d'un camion ou d'une remorque. L'ouverture 12 est équipée, également à chacun des angles du boîtier, de quatre pièces 120 pour la réception et la fixation d'un couvercle 2 qui sera décrit ci-après.

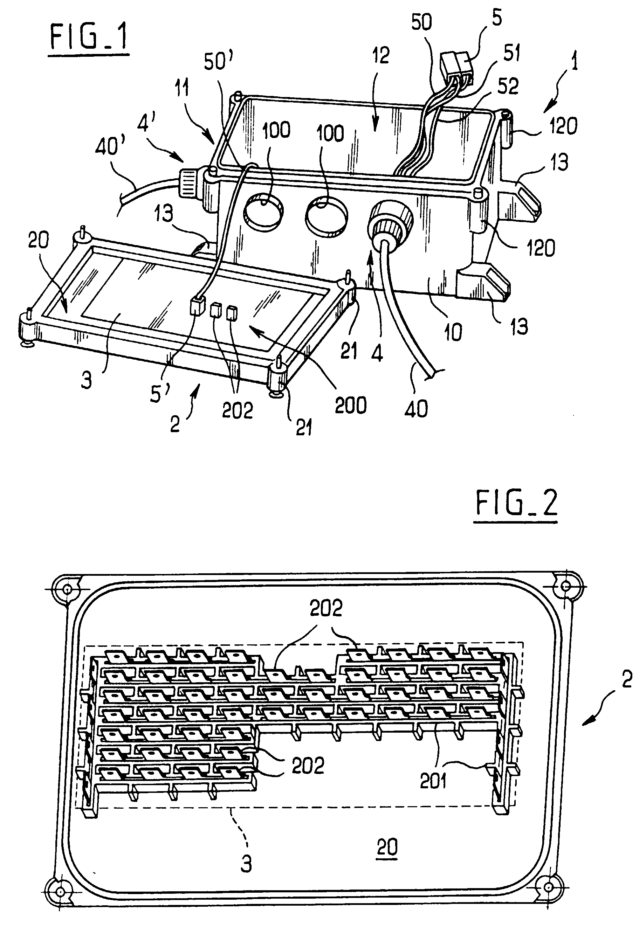

Comme le montre la figure 1, l'une des parois 10 du boîtier comporte des ouvertures circulaires 100. Ces ouvertures sont destinées à recevoir des pièces de fixation 4 sur lesquelles sont connectées des gaines 40. Dans l'exemple représenté, sont logés à l'intérieur de la gaine 40, trois fils électriques 50, 51 et 52, qui traversent la pièce 4 et l'ouverture 100 correspondante pour rentrer à l'intérieur du boîtier.

Les trois fils électriques cités ci-dessus ont leur extrémité libre branchée sur un même connecteur 5.

Dans l'exemple représenté, l'une des faces latérales 11 du boîtier reçoit également une pièce 4' équipée d'une gaine 40' traversée par un fil électrique 50' relié à un connecteur 5'.

Les pièces 4 et 4' peuvent, par exemple, être équipées de moyens de traversée étanche de câble, du type presse-étoupe.

Bien entendu, les deux autres faces latérales du boîtier peuvent, dans un autre mode de réalisation, être également pourvues d'ouvertures 100.

La boîte selon l'invention comporte également un couvercle 2. Dans la représentation de la figure 1, ce couvercle est enlevé du boîtier 1 et sa face interne 20, c'est-à-dire celle destinée à être tournée vers l'intérieur du boîtier, est clairement visible. Ce couvercle a bien entendu des dimensions adaptées pour venir coiffer l'ouverture 12 du boîtier 1. Des tétons 21 sont prévus à chacun de ses angles et sont adaptés pour venir se positionner sur les pièces 120 complémentaires du boîtier.

La face 20 du couvercle est équipée d'une série de barrettes métalliques 200 destinées à recevoir les connecteurs 5 et 5' sur lesquels sont branchés les fils électriques précités. Dans un but de simplification de lecture, seules les broches mâles 202 d'une seule barrette ont été représentées à la figure 1.

Chaque barrette 200 a la forme d'une plaquette rectangulaire dont l'un des grands côtés est crénelé, de façon à former lesdites broches mâles 202.

Dans la paroi 20 du couvercle sont formés une série de nervures 201 venant de moulage avec le couvercle, entre lesquelles sont fixées les barrettes métalliques 200.

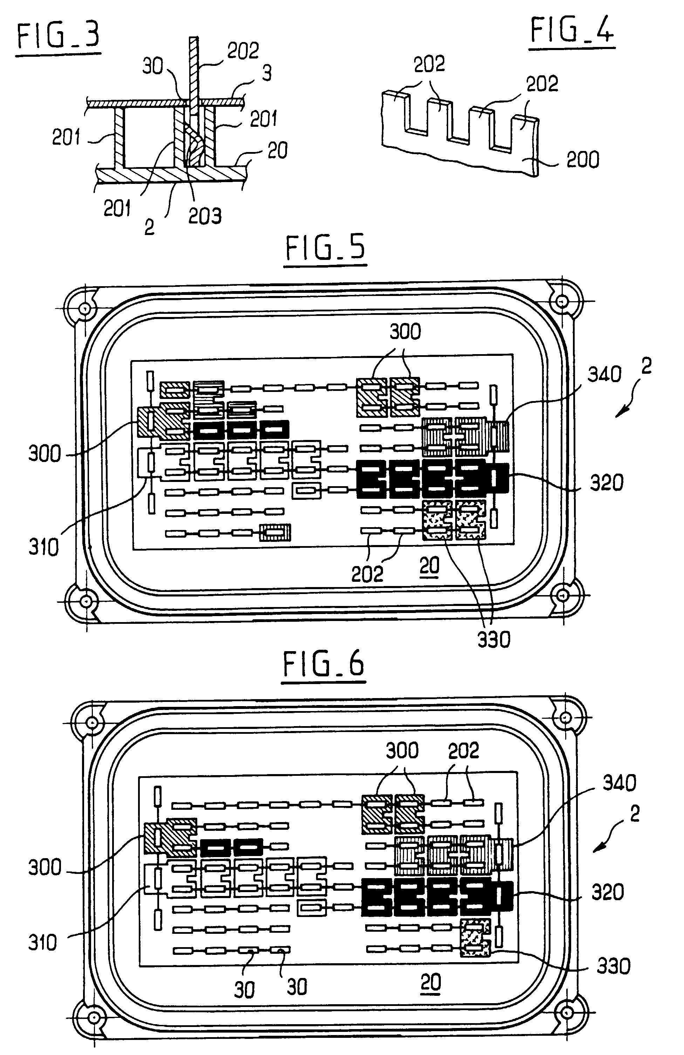

Comme le montre particulièrement la figure 3, dans chaque barrette 200 est formée, par découpage de matière, au moins une languette 203 dont l'extrémité libre est tournée vers les broches mâles 202. Cette languette est tordue une première fois vers un côté de la languette puis une seconde fois vers le côté opposé. Ainsi, il est possible de mettre en place la barrette 200 entre deux nervures voisines 201. Toutefois, tout retrait est impossible, l'extrémité libre de la languette venant en prise dans la matière plastique d'une nervure. On réalise ainsi une fixation par harponnement.

Bien entendu, certaines barrettes peuvent être reliées électriquement entre elles de manière adéquate.

La paroi 20 est destinée à recevoir une étiquette 3 dont le contour a été tracé en traits pointillés à la figure 2. Comme le montrent les figures 3 et 6, cette étiquette comporte une série d'ouvertures 30 dont le positionnement et la forme correspondent à celle des broches mâles 202 des barrettes métalliques 200, de sorte qu'elle peut se positionner sur le bord libre des nervures 201, en se laissant traverser par les broches 202. L'étiquette se trouve donc correctement positionnée et maintenue en place par les barrettes 200.

Conformément à l'invention, cette étiquette porte un repère visuel au voisinage de chaque broche 202 ou de chaque groupe de broches. Dans les exemples représentés aux figures 5 et 6, ces repères visuels sont constitués par des zones 300 à 340 dont les couleurs respectives sont identiques à celles des connecteurs associés.

Ainsi, par exemple, les zones 300 sont de couleur verte, les zones 340 rouges, les zones 320 noires, les zones 310 blanches et enfin, les zones 330 oranges. De plus, le contour de chacune des zones qui vient d'être citée est identique au contour des connecteurs que la ou les barrettes sont destinées à recevoir.

De la sorte, les branchements des différents connecteurs sont grandement simplifiés, puisqu'il suffit de faire correspondre chaque connecteur à brancher avec une zone de couleur et de contour identiques.

On évite ainsi de nombreuses erreurs de branchement. De plus celui-ci peut être réalisé par un individu qui n'a pas de connaissance particulière en électricité.

Par ailleurs, ce système évite tout risque de court-circuit.

Enfin, l'accès pour le montage, le branchement et la maintenance est beaucoup plus aisé, puisque celui-ci s'opère sur le couvercle de la boîte.

## Revendications

1. Boîte de raccordement électrique pour un véhicule, qui comprend un boîtier (1) muni d'un couvercle (2), et une série de barrettes métalliques (200) dont les broches mâles (202) sont destinées à recevoir des connecteurs (5, 5') reliés à des fils électriques (50, 51, 52, 50'), caractérisée en ce que lesdites barrettes sont portées par la face interne (20) du couvercle (2), en ce que cette dernière est pourvue d'au moins une étiquette (3) comportant des ouvertures (30) pour le passage des broches mâles (202), engagée sur lesdites broches (202) et retenue par celles-ci et en ce que ladite étiquette (3) porte un repère visuel (300, 310, 320, 330, 340) au voisinage de chaque broche (202) ou groupe de broches, tandis que chaque connecteur associé (5, 5') porte un repère visuel correspondant.

2. Boîte selon la revendication 1, caractérisée en ce que lesdites barrettes (200) sont harponnées dans des gorges formées par une série de nervures (201) solidaires du couvercle (2) et que l'étiquette (3) s'appuie sur le bord libre des nervures (201).

3. Boîte selon la revendication 1 ou 2, caractérisée en ce que ledit repère visuel (300, 310, 320, 330, 340) consiste en une zone de couleur identique à la couleur du connecteur (3).

4. Boîte selon la revendication 3, caractérisée en ce que en outre, le contour de ladite zone (300, 310, 320, 330, 340) est identique à celui du connecteur.

5. Boîte selon les revendications 3 et 4 prises en combinaison, caractérisée en ce que ladite zone (300, 310, 320, 330, 340) entoure les ouvertures (30).

## Patentansprüche

1. Elektrische Anschlußdose für ein Fahrzeug, das ein Gehäuse (1) mit einem Deckel (2) und eine Reihe von Metallanschlußleisten (200) umfaßt, deren Anschlußstifte (202) für die Aufnahme von mit Leitungsdrähten (50, 51, 52, 50') verbundenen Verbindern (5, 5') bestimmt sind, **dadurch gekennzeichnet,** daß die besagten Anschlußleisten an der Innenseite (20) des Deckels (2) angebracht sind, daß diese Innenseite mit mindestens einem Bezeichnungsschild (3) versehen ist, das Öffnungen (30) für den Durchgang der Anschlußstifte (202) enthält und auf den besagten Anschlußstiften (202) eingesetzt ist und durch diese gehalten wird, und daß das besagte Bezeichnungsschild (3) eine Sichtmarkierung (300, 310, 320, 330, 340) in der Nähe jedes Anschlußstifts (202) bzw. jeder Anschlußstiftgruppe aufweist, während jeder zugehörige Verbinder (5, 5') eine entsprechende Sichtmarkierung aufweist.

2. Anschlußdose nach Anspruch 1, **dadurch gekennzeichnet,** daß die besagten Anschlußleisten (200) in Auskehlungen eingehakt sind, die in eine Reihe von fest mit dem Deckel verbundenen Rippen (201) eingearbeitet sind, und daß das Bezeichnungsschild (3) an der freien Kante der Rippen (201) aufliegt.

3. Anschlußdose nach Anspruch 1 oder 2, **dadurch gekennzeichnet,** daß die Sichtmarkierung (300, 310, 320, 330, 340) aus einem Feld in einer Farbe besteht, die mit der Farbe des Verbinders (5) identisch ist.

4. Anschlußdose nach Anspruch 3, **dadurch gekennzeichnet,** daß der Umriß des besagten Felds (300, 310, 320, 330, 340) mit dem Umriß des Verbinders identisch ist.

5. Anschlußdose nach den Ansprüchen 3 und 4 in Kombination , **dadurch gekennzeichnet,** daß das besagte Feld (300, 310, 320, 330, 340) die Öffnungen (30) umgibt.

## Claims

1. An electrical connection box for a vehicle, comprising a case (1) equipped with a cover (2) and a series of metal connection bars (200) the male contacts (202) of which are adapted to receive connectors (5, 5') attached to electric wires (50, 51, 52, 50'), characterized in that the said connection bars are carried on the internal surface (20) of the cover (2) and in that the latter is provided with at least one label (3) comprising openings (30) for the male contacts (202) to pass through, engaged on the said contacts (202) and held by the latter, and in that the said label panel (3) bears a visual identification mark (300, 310, 320, 330, 340) near each contact (202) or group of contacts, whilst each associated connector (5, 5') comprises a corresponding visual identification mark.

2. A box in accordance with claim 1, characterized in that the said connection bars (200) are arrested in grooves formed by a series of ribs (201) fixed to the cover (2) and the label (3) bears against the free ends of the ribs (201).

3. A box in accordance with claim 1 or claim 2, characterized in that the said visual identification mark (300, 310, 320, 330, 340) consists of a region with a colour identical to the colour of the connector (3).

4. A box in accordance with claim 3, characterized in that, in addition, the contour of the said visual identification mark (300, 310, 320, 330, 340) is identical to that of the connector.

5. A box in accordance with claim 3 and claim 4 taken together, characterized in that the said region (300, 310, 320, 330, 340) surrounds the openings (30).
